# FASCICULE DE BREVET EUROPEEN

(11) **EP 0 597 078 B1**
(45) Date de publication et mention de la délivrance du brevet: **27.08.1997**
(21) Numéro de dépôt: 93913090.2
(22) Date de dépôt: 04.06.1993
(51) Int. Cl.: G01N 27/12

(54) **DISPOSITIF DE DETECTION SELECTIVE DE GAZ**
VORRICHTUNG ZUM SELEKTIVEN NACHWEIS VON GASEN
SELECTIVE GAS DETECTION DEVICE

(30) Priorité: 04.06.1992 FR 9206791
(43) Date de publication de la demande: 18.05.1994
(73) Titulaire: GAZ DE FRANCE (SERVICE NATIONAL), F-75017 Paris (FR)
(72) Inventeur: LOESCH, Muriel, F-75019 Paris (FR); MENIL, Francis, F-33650 La Brede (FR); LUCAT, Claude, F-33610 Cestas (FR); DUTRONC, Pascale, F-75011 Paris (FR); MARTEAU, Véronique, F-95470 Survilliers (FR)
(74) Mandataire: Thévenet, Jean-Bruno
(86) Numéro de dépôt international: FR9300534
(87) Numéro de publication internationale: WO9324827

(56) Documents cités:
- EP-A- 0 313 390
- EP-A- 0 444 753
- GB-A- 2 002 907
- US-A- 4 457 161
- US-A- 5 047 214
- PATENT ABSTRACTS OF JAPAN vol. 5, no. 110 (P-71)17 Juillet 1981 & JP-A-56 054 348
- PATENT ABSTRACTS OF JAPAN vol. 13, no. 32 (P-817)25 Janvier 1989 & JP-A-63 231 254
- PATENT ABSTRACTS OF JAPAN vol. 9, no. 129 (P-361)5 Juin 1985 & JP-A-60 014 148

## Description

La présente invention concerne un dispositif pour détecter sélectivement un gaz présent dans l'air ambiant et principalement destiné à des applications de sécurité notamment la détection de fuites dans les réseaux et ensembles mettant en oeuvre un tel gaz.

Classiquement, en cas d'emploi de capteurs à l'état solide, notamment à semiconducteurs, la détection de gaz est basée sur la variation, qui peut être rapportée à la concentration du gaz, de la résistance d'un oxyde métallique semiconducteur, comme Sn0₂, en présence d'un gaz réducteur.

Toutefois, une telle méthode présente l'inconvénient de ne pas discriminer correctement les gaz réducteurs entre eux.

Il est connu pour améliorer la sélectivité de tels capteurs d'adjoindre à l'élément semiconducteur qui le constitue un catalyseur constitué par un métal noble tel que le platine ou le palladium dans une proportion qui n'excède pas 1% du poids de l'oxyde.

Il est aussi connu d'améliorer la réponse de ces capteurs en faisant varier la température à laquelle ils sont portés au moyen d'une résistance de platine intégrée à ce capteur et servant de réchauffeur.

Cependant l'un comme l'autre de ces perfectionnements à la précédente méthode n'apportent pas de solutions pleinement satisfaisantes, c'est pourquoi il a été suggéré d'utiliser la variation de température du capteur due au dégagement de chaleur de combustion du gaz en complément de la mesure de conductance.

Malheureusement, la mise en oeuvre d'une telle méthode s'avère particulièrement difficile car la température du capteur dépend non seulement de la chaleur de la réaction, mais aussi des variations de la température ambiante ou encore des conditions d'écoulement du gaz, vitesse et orientation, qui provoquent des variations de la température du capteur du même ordre de grandeur que celle liée à la combustion du gaz.

Un but de l'invention est de réaliser un dispositif de détection de gaz à la fois simple et fiable qui permette de compenser les variations de température ambiante et d'amplifier la variation de température du capteur due à la combustion du gaz.

Un autre but de l'invention est de mettre en oeuvre un dispositif insensible ou en tout cas peu sensible aux conditions d'écoulement du gaz agissant sur le capteur à l'état solide constituant un élément de ce dispositif.

Ces buts sont atteints par un dispositif de détection sélective de gaz tel que revendiqué dans la revendication 1.

La différence de température entre le capteur à l'état solide et le capteur de référence due à la combustion du gaz donne une image simple de la concentration du gaz qu'il suffit ensuite de combiner avec la variation de la résistance du capteur à l'état solide pour permettre cette sélection entre les deux gaz pouvant interagir avec ces capteurs.

Avantageusement, la couche semiconductrice est munie d'un catalyseur dans une proportion supérieure à 1% mais inférieure ou égale à 20% en poids.

Cette augmentation notable de la quantité de catalyseur mis en oeuvre qui habituellement ne dépasse pratiquement pas un seuil de 1% en poids permet de façon surprenante une amélioration considérable de la sélectivité du capteur à l'état solide par l'élévation de température qu'il apporte, même pour de faibles concentrations de gaz. De même, il augmente notablement la sensibilité du gaz à détecter.

De préférence, la couche semiconductrice du capteur à l'état solide est recouverte d'un dépôt poreux isolant.

La mise en oeuvre d'un dépôt poreux isolant assure un préchauffage du gaz combustible à la température de fonctionnement du capteur et ainsi, en augmentant la part de gaz entrant en réaction, améliore très notablement la sensibilité d'un tel capteur à l'état solide. En outre, en isolant l'élément semiconducteur du flux de gaz, elle limite également considérablement l'influence des conditions d'écoulement du gaz.

De même, le capteur à l'état solide peut comporter également une couche isolante recouvrant l'élément chauffant et la première face dudit substrat.

Cette couche supplémentaire poreuse et comprenant éventuellement un catalyseur, comme du platine ou du palladium, de 1 à 20% en poids, permet encore un dégagement complémentaire de chaleur et donc une amélioration des performances de ce capteur.

Les méthodes de mélange et de la technologie multicouche utilisées permettent la création d'un produit présentant un taux de catalyseur important sans pour autant détruire ses propriétés semiconductrices.

Le capteur de référence qui est dépourvu de catalyseur est réalisé selon une technologie identique à celle dudit capteur à l'état solide et comprend un substrat isolant ayant des première et seconde faces, et un élément chauffant déposé sur la première face dudit substrat, ces éléments présentant des dimensions identiques à celles du capteur à l'état solide.

De même, ce capteur de référence peut comporter une couche isolante dépourvue, de catalyseur, recouvrant l'élément chauffant et la première face dudit substrat si le capteur à l'état solide comporte lui aussi une telle couche supplémentaire isolante.

De préférence, la deuxième face dudit substrat comporte également une seconde couche isolante.

Ainsi, les deux capteurs ont des échanges thermiques semblables avec le milieu extérieur et l'effet dû au seul gaz peut être différencié plus facilement.

Selon une caractéristique particulière, les tensions de seuil et les tensions d'alimentation de l'élément semiconducteur et des éléments chauffants sont élaborées à partir d'une unique source de référence.

L'utilisation d'une source unique d'alimentation pour l'ensemble du dispositif permet ici encore de limiter les influences externes (fluctuations de cette source unique) qui seront alors identiques et auront le même effet pour tous les composants.

Les éléments chauffants sont disposés chacun dans une branche d'un pont de résistances alimenté par la source unique de référence et délivrant par l'intermédiaire d'un amplificateur la différence de tension S.

Une alarme visuelle ou sonore est déclenchée lorsque l'une des tensions de seuil prédéterminée est franchie sans que l'autre le soit.

D'autres avantages et caractéristiques de la présente invention ressortiront mieux à la description qui va suivre, faite, à titre d'exemple non limitatif, en référence aux dessins annexés dans lesquels :
- la figure 1 montre un capteur à l'état solide mis en oeuvre dans le dispositif de détection selon l'invention,
- la figure 2 montre un capteur de référence coopérant avec le capteur de la figure 1,
- la figure 3 est un schéma bloc du dispositif de détection sélective de gaz selon l'invention intégrant les capteurs des figures 1 et 2,
- la figure 4 représente une courbe donnant l'allure de signaux caractéristiques de la figure 3 en fonction du débit de gaz, et
- les figures 5 et 6 représentent des courbes donnant l'évolution de signaux fournis par le dispositif de la figure 3 en fonction de la concentration en gaz de deux milieux gazeux différents.

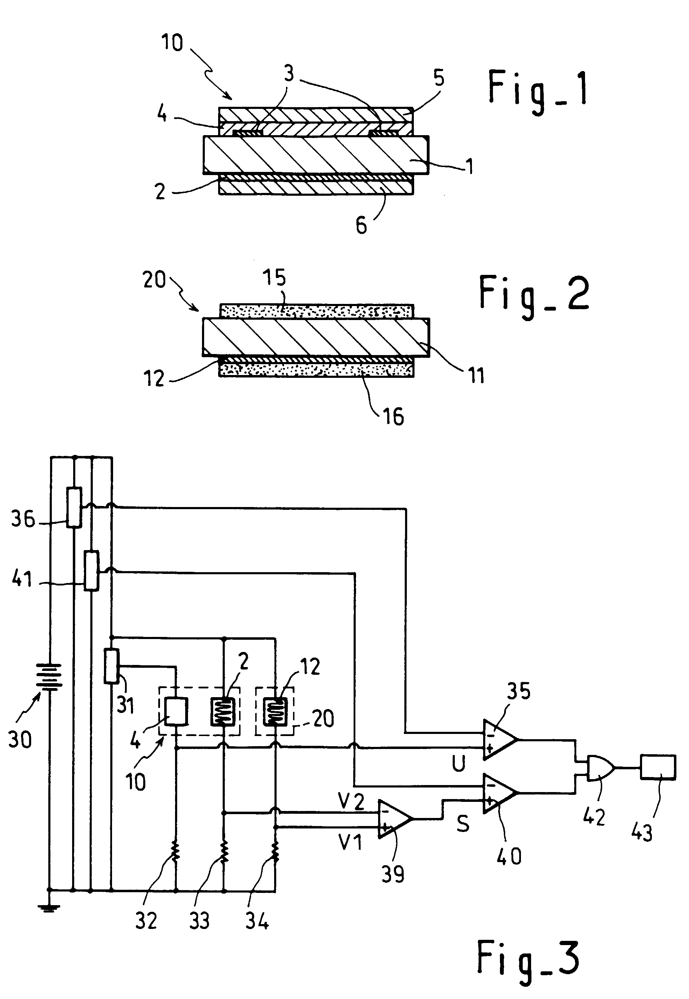

La figure 1 représente un capteur de gaz 10 du type à l'état solide.

Ce capteur multicouches comprend plusieurs éléments :
- un substrat isolant 1, de préférence en alumine, par exemple de forme parallélépipédique, présentant une face supérieure et une face inférieure;
- un élément chauffant 2, ou réchauffeur, déposé sur une face du substrat par sérigraphie et présentant par exemple, une forme de serpentin ;
- des électrodes métalliques interdigitées 3 déposées en technologie de couche épaisse ou de couche mince, sur l'autre face du substrat ;
- une couche semiconductrice 4 formée en technologie de couche épaisse ou de couche mince sur les électrodes et l'autre face du substrat ; et
- un dépôt 5 à base d'alumine poreuse recouvrant la couche semiconductrice.

Afin d'éviter toute interaction entre l'élément semiconducteur 4 et les électrodes métalliques 3, ces électrodes métalliques sont réalisées dans un métal noble stable à haute température comme le platine ou l'or, l'élément semiconducteur étant de préférence à base de Sn02.

Avantageusement, un dépôt supplémentaire isolant 6 pourra recouvrir l'élément chauffant 2 ainsi que la face du substrat sur laquelle il a été déposé.

L'ensemble est monté sur un support, non représenté, permettant de relier l'élément chauffant et les électrodes métalliques à deux circuits électriques d'un dispositif de détection dont la description et le fonctionnement seront explicités plus avant.

L'exploitation d'une part de la variation de résistance de la couche semiconductrice 4 due à l'interaction avec le gaz réducteur et d'autre part de la variation de température du capteur 10, due au dégagement de chaleur de combustion du gaz, s'avère impossible lorsque ce capteur est utilisé à la température du milieu ambiant. En effet, celui-ci sera le plus souvent placé dans une pièce d'un milieu industriel, par exemple une chaufferie, ou domestique comme une cuisine, dans laquelle on désire assurer la sécurité des personnes et des biens.

Ainsi, on peut estimer que, dans le cas de la détection de méthane (CH₄) sélectivement par rapport à l'éthanol (C₂H₅OH), les variations de température et de résistance du dispositif ne seront significatives qu'au delà de 300°C. C'est pourquoi, le capteur présente un réchauffeur 2 qui permet de maintenir sa température dans une plage comprise entre 350 et 550°C.

Il doit être noté que cette plage de température peut bien évidemment être différente s'il s'agit d'effectuer une détection de gaz autres que ceux précités.

Un des rôles du dépôt à base d'alumine poreuse 5 est d'assurer un préchauffage du gaz combustible à la température de travail définie par l'alimentation de l'élément chauffant 2. Un autre rôle de ce dépôt est d'assurer une combustion sélective du gaz liée aux différentes températures de combustion des gaz. Ainsi, dans le cas d'une détection sélective de méthane par rapport à de l'éthanol, ce dépôt effectue la combustion partielle de l'alcool avant qu'il n'arrive sur le semiconducteur permettant alors un fort dégagement de chaleur et une diminution du signal au niveau du semiconducteur, ce qui n'a pas lieu avec le méthane.

En outre, cette couche d'alumine poreuse 5 évite une action directe du gaz sur la couche semiconductrice 4, laquelle action directe est très perturbatrice pour la mesure. En effet, il est difficile de maîtriser le gaz réagissant avec le capteur, ce gaz pouvant présenter des conditions d'écoulement totalement variables en vitesse comme en orientation. La couche 5 en diminuant les variations thermiques dues aux fluctuations extérieures d'écoulement augmente la sélectivité du capteur et permet ainsi une excellente corrélation entre la variation de température du semiconducteur et la combustion du gaz, en particulier l'éthanol.

Afin d'améliorer encore la sélectivité du capteur, et notamment pour de faibles concentrations de gaz, l'élément semiconducteur 4 et les dépôts poreux isolants 5 et 6 peuvent recevoir un catalyseur constitué d'un matériau noble comme le platine ou le palladium, le catalyseur de l'élément semiconducteur pouvant être différent de celui du dépôt poreux. De préférence, les dépôts poreux seront munis de platine et l'élément semiconducteur de palladium. Toutefois, alors que la concentration d'un tel adjuvant est en principe inférieure à 1% en poids, il est procédé selon l'invention à un ajout compris entre 1 et 20% en poids. De façon surprenante, la sélectivité du capteur est grandement améliorée sous l'effet de l'élévation de température dépendant du gaz provoquée par cette adjonction, de même que la sensibilité au gaz à détecter est notablement accrue. La répartition du catalyseur dans le semiconducteur est réalisée par dispersion de sorte que ce dernier conserve ses propriétés semiconductrices malgré le pourcentage élevé de catalyseur qu'il contient.

Les variations de température dues aux fluctuations de la température ambiante qui sont du même ordre de grandeur que celles dues à la combustion du gaz obligent à réaliser un dispositif de détection qui soit le moins sensible possible à ces influences extérieures. Dans cette optique, le dispositif de détection selon l'invention comporte, outre le capteur à l'état solide 10 susmentionné, un capteur de référence 20 réalisé selon la même technologie et présentant des dimensions analogues au capteur de mesure 10.

La figure 2 représente un tel capteur de référence comportant :
- un substrat isolant 11, de préférence en alumine et présentant une face supérieure et une face inférieure; et
- un élément chauffant 12, ou réchauffeur, déposé par sérigraphie sur une face du substrat et présentant une forme de serpentin.

Eventuellement, lorsque le capteur à l'état solide 10 comporte une couche isolante 6 recouvrant l'élément chauffant et la face correspondante du substrat, le capteur de référence est muni également d'une couche supplémentaire isolante 16, constituée par exemple de verre, recouvrant l'élément chauffant 12 et la face du substrat sur laquelle cet élément chauffant est déposé. Afin d'améliorer encore la similitude de comportement vis à vis de la température ambiante ou de l'écoulement du gaz autour des deux capteurs, une seconde couche isolante 15 peut être déposée sur l'autre face du substrat du capteur de référence 20. L'épaisseur de cette couche est déterminée de telle sorte que la réponse thermique aux variations de température ambiante soit identique pour les deux capteurs. L'ensemble ainsi créé est monté dans le support contenant également le capteur 10 et relié à un autre circuit électrique du dispositif de détection.

Cette identité de constitution, de géométrie et de technologie de fabrication du capteur de référence 20 et du capteur à l'état solide 10, le capteur de référence étant simplement dépourvu de l'élément semiconducteur, permet de diminuer la sensibilité aux fluctuations atmosphériques externes de température mais aussi d'écoulement, et ainsi de faciliter la mesure par le dispositif de détection.

Il doit être noté que, afin de mieux différencier l'effet de la combustion du gaz sur les deux capteurs, les couches supplémentaires 15 et 16, lorsqu'elles sont présentes au niveau du capteur de référence 20, ne doivent posséder aucune propriété catalytique, au contraire des couches isolantes 5 et 6 du capteur à l'état solide 10.

Le schéma bloc de la figure 3 correspond à un exemple de réalisation du dispositif de détection selon l'invention mettant en oeuvre les capteurs à l'état solide et de référence précités et consistant à déterminer d'une part la valeur de la résistance de la couche semiconductrice 4 et d'autre part la différence de température entre le capteur à l'état solide 10 et le capteur de référence 20, sous l'effet de la combustion du gaz, dans le cas d'une détection de méthane sélective par rapport à l'éthanol.

Tout d'abord, il est important de noter que ce dispositif est alimenté par une source de référence unique 30 à partir de laquelle les diverses tensions de référence nécessaires à son fonctionnement sont élaborées. Cette alimentation unique permet de limiter les influences externes qui seront alors identiques pour tous les composants. Ainsi, l'élément semiconducteur 4 du capteur à l'état solide 10 est alimenté, au travers d'une première résistance de charge 32, par l'intermédiaire d'une référence de tension 31 élaborée à partir de la source de référence unique 30. De même, les éléments chauffants 2, 12 du capteur à l'état solide 10 et du capteur de référence 20 sont quant à eux alimentés directement à partir de la source de référence unique 30, au travers de résistances de charge 33 respectivement 34.

Afin d'obtenir une température de fonctionnement nominale voisine de 450°C (soit au centre de la plage 350°C-550°C précédemment définie) et selon la valeur des résistances de charge, il peut être choisi une alimentation de 15 à 20V, ce qui permet la réalisation d'un dispositif compact.

Un premier signal de mesure U est obtenu aux bornes de la première résistance de charge 32. Ce signal qui varie en fonction de la résistance de l'élément semiconducteur 4 est comparé à l'aide d'un premier comparateur 35 avec une première tension de seuil délivrée par une référence de tension 36 élaborée à partir de la source unique d'alimentation 30.

Un second signal de mesure S est obtenu à partir d'une différence de tension existant entre d'une part, une tension V2 prise aux bornes de la deuxième résistance de charge 33 et qui varie en fonction de la température de l'élément chauffant 2 du capteur à l'état solide 10, et d'autre part, une tension V1 prise aux bornes de la troisième résistance de charge 34 et qui varie en fonction de la température de l'élément chauffant 12 du capteur de référence 20. Les tensions relevées aux bornes des résistances de charge 33,34 sont appliquées aux entrées d'un amplificateur d'instrumentation 39 qui réalise la différence S = k(V1-V2).

Le signal S est alors comparé à l'aide d'un second comparateur 40 à une seconde tension de seuil délivrée par une référence de tension 41 également élaborée à partir de la source unique de référence 30.

Un circuit logique ET 42 reçoit les sorties des deux comparateurs 35,40 et délivre un signal pour une alarme visuelle ou sonore 43.

En présence d'un gaz combustible, la résistance de l'élément semiconducteur varie et la combustion du gaz en provoquant un dégagement de chaleur va provoquer une variation de température de l'élément chauffant 2 du capteur à l'état solide 10 alors qu'au niveau du capteur de référence ce gaz n'est soumis à aucune combustion. Par contre, les variations de température des réchauffeurs 2 et 12, dues à des causes autres que la chaleur de réaction entre le gaz et le capteur, c'est-à-dire liées à la température et à l'écoulement du gaz, sont voisines sur les deux capteurs.

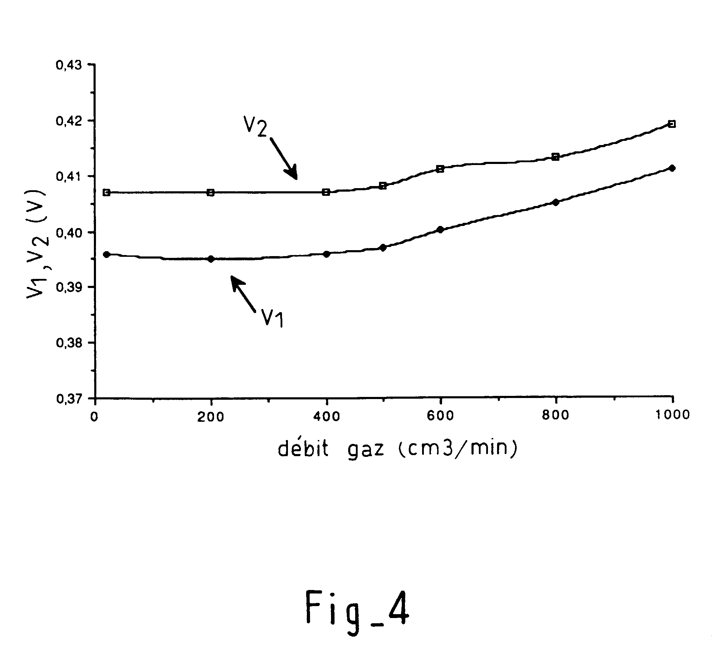

La figure 4 représente les variations des tensions V1 et V2 au niveau des éléments chauffants pour un débit de gaz variable. On peut noter que les variations de tension au niveau de chacun des deux capteurs sont faibles et comparables, notamment pour des débits élevés.

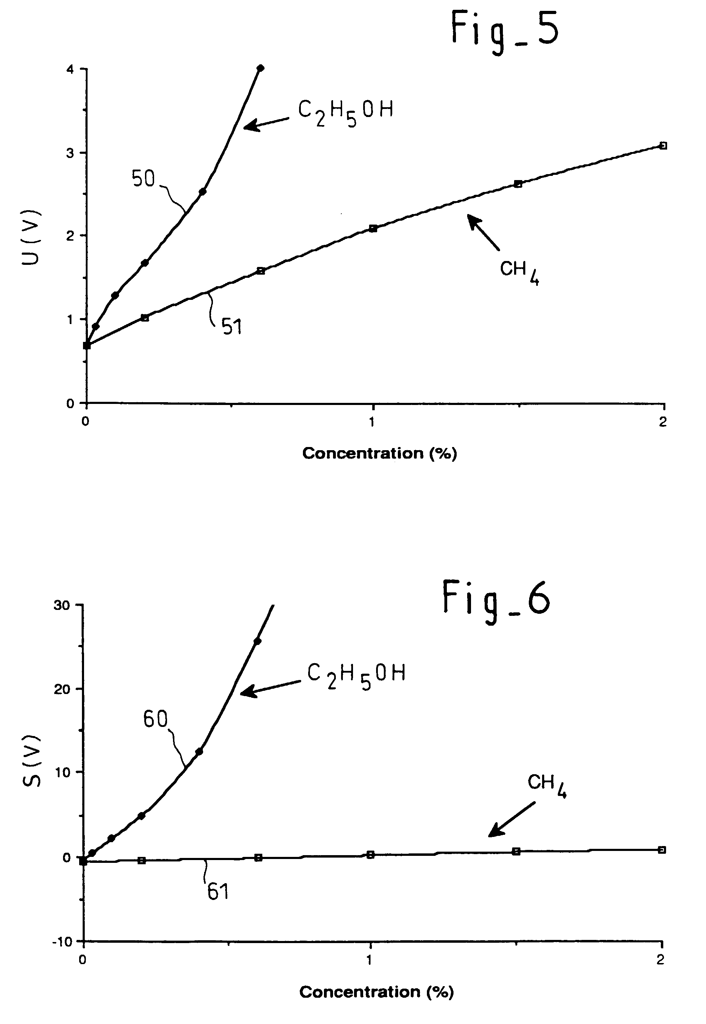

Les figures 5 et 6 montrent les caractéristiques des signaux de mesure U et S pour deux types de gaz, à savoir du méthane CH₄ et de l'éthanol C₂H₅OH. Les concentrations indiquées sont des concentrations volumiques.

Dans le cas d'une détection de méthane sélective par rapport à l'éthanol, la chaleur dégagée est bien plus importante en présence de cet éthanol 60 qu'en présence du méthane 61 comme le montre la figure 6. De plus, la résistance de l'élément semiconducteur, qui se traduit par les courbes 50,51 est modifiée pour ces deux gaz (figure 5). On comprend alors aisément qu'il est possible, en réglant les première et seconde tensions de seuil, d'obtenir le déclenchement de l'alarme visuelle ou sonore 43 si les deux conditions suivantes sont remplies : la tension U qui dépend de la résistance du semiconducteur est supérieure à un premier seuil défini par la référence de tension 36 et la tension différentielle S qui dépend de l'augmentation de température liée au gaz est inférieure à un second seuil défini par la référence de tension 41.

La présente invention se prête donc particulièrement bien à la détection sélective du méthane par rapport à l'éthanol comme il a été démontré mais, bien évidemment, elle n'est pas limitée à ces seuls gaz et trouve application avec tous autres gaz présentant des dégagements de chaleur mesurables.

## Revendications

1. Dispositif de détection sélective de gaz permettant la détection d'un premier gaz par rapport à un second gaz caractérisé en ce qu'il comprend : . un capteur de mesure à l'état solide muni d'un substrat isolant (1) ayant une première et une seconde face, d'un élément chauffant (2) déposé sur la première face dudit substrat, d'électrodes métalliques (3) déposées sur la seconde face dudit substrat, et d'une couche semiconductrice (4) formée sur lesdites électrodes et sur la seconde face dudit substrat,
. un capteur de référence (20) muni d'un substrat isolant (11) ayant une première et une seconde face et d'un élément chauffant (12) déposé sur la première face dudit substrat, ledit substrat isolant et ledit élément chauffant ayant des dimensions identiques à celles respectivement du substrat isolant et de l'élément chauffant du capteur de mesure.
. des moyens pour déterminer une tension U représentative de la résistance de l'élément semiconducteur (4) du capteur de mesure à l'état solide (10),
. des moyens pour déterminer une différence de tension S entre une tension représentative de la température de l'élément chauffant (2) dudit capteur de mesure à l'état solide et une tension représentative de la température de l'élément chauffant (12) dudit capteur de référence (20),
. et des moyens pour comparer cette tension U et cette différence de tension S à deux tensions de seuil différentes et prédéterminées afin de permettre la détection sélective de gaz.

2. Dispositif selon la revendication 1, caractérisé en ce que la couche semiconductrice (4) du capteur de mesure à l'état solide (10) est munie d'un catalyseur dans une proportion supérieure à 1% mais inférieure ou égale à 20% en poids.

3. Dispositif selon la revendication 1 ou la revendication 2, caractérisé en ce que ledit capteur de mesure à l'état solide comporte en outre une couche isolante (6) recouvrant l'élément chauffant et la première face dudit substrat.

4. Dispositif selon l'une quelconque des revendications 1 à 3, caractérisé en ce que ledit capteur de mesure à l'état solide comporte en outre un dépôt poreux isolant (5) déposé sur la couche semiconductrice (4).

5. Dispositif selon la revendication 3 ou la revendication 4, caractérisé en ce que lesdits dépôt poreux isolant et couche isolante (5,6) sont constitués par de l'alumine.

6. Dispositif selon la revendication 5, caractérisé en ce que au moins une des couches isolantes (5,6) du capteur de mesure à l'état solide (10) est munie d'un catalyseur dans une proportion supérieure à 1% mais inférieure ou égale à 20% en poids.

7. Dispositif selon la revendication 1, caractérisé en ce que ledit capteur de référence (20) comporte en outre une couche isolante (16) dépourvue de catalyseur et recouvrant l'élément chauffant et la première face dudit substrat, dès lors que le capteur de mesure à l'état solide (10) comporte lui aussi une telle couche supplémentaire isolante.

8. Dispositif selon la revendication 7, caractérisé en ce que ledit capteur de référence (20) comporte en outre une seconde couche isolante (15) également dépourvue de catalyseur et recouvrant la seconde face dudit substrat.

9. Dispositif selon la revendication 7 ou la revendication 8, caractérisé en ce que les couches isolantes (15,16) dépourvues de catalyseur du capteur de référence sont constituées de verre.

10. Dispositif selon l'une quelconque des revendications 1 à 8, caractérisé en ce que les capteurs de mesure et de référence (10,20) sont réalisés selon une technologie dite multicouche.

11. Dispositif selon l'une quelconque des revendications 1 à 10, caractérisé en ce que lesdites tensions de seuil et les tensions d'alimentation de l'élément semiconducteur (4) et des éléments chauffants (2,12) sont élaborées à partir d'une unique source de référence (30).

12. Dispositif selon l'une quelconque des revendications 1 à 11, caractérisé en ce que les éléments chauffants (2,12) sont disposés chacun dans une branche d'un pont de résistances alimenté par la source unique de référence (30) et délivrant par l'intermédiaire d'un amplificateur (39) la différence de tension S.

13. Dispositif selon l'une quelconque des revendications 1 à 12, caractérisé en ce qu'il comporte en outre une alarme visuelle ou sonore (43) qui est déclenchée lorsque l'une des tensions de seuil prédéterminée est franchie sans que l'autre le soit.

## Patentansprüche

1. Vorrichtung zum selektiven Erfassen von Gas, die die Erfassung eines ersten Gases bezüglich eines zweiten Gases ermöglicht, dadurch gekennzeichnet, daß sie aufweist:
einen Feststoff-Meßaufnehmer, versehen mit einem isolierenden Substrat (1), der eine erste und eine zweite Oberseite aufweist, mit einem Heizelement (2), das auf der ersten Oberseite des Substrats angeordnet ist, mit metallischen Elektroden (3), die auf der zweiten Oberseite des Substrats angeordnet sind, und mit einer halbleitenden Schicht (4) versehen ist, die auf den Elektroden und auf der zweiten Oberseite des Substrats ausgebildet ist,
einen Referenzaufnehmer (20), der mit einem isolierenden Substrat (11) versehen ist, das eine erste und zweite Oberseite und ein Heizelement (12) aufweist, das auf der ersten Oberseite des Substrats angeordnet ist, wobei das isolierende Substrat und das Heizelement identische Abmessungen zu denen des isolierenden Substrats beziehungsweise des Heizelements des Meßaufnehmers aufweisen,
Einrichtungen zum Bestimmen einer Spannung U, die dem Widerstand des halbleitenden Elements (4) des Feststoff-Meßaufnehmers (10) entspricht,
Einrichtungen zum Bestimmen einer Spannungsdifferenz S zwischen einer Spannung, die der Temperatur des Heizelements (2) des Feststoff-Meßaufnehmers entspricht und einer Spannung, die der Temperatur des Heizelements (12) des Referenzaufnehmers (20) entspricht,
und Einrichtungen zum Vergleichen dieser Spannung U und dieser Spannungsdifferenz S mit zwei unterschiedlichen und vorbestimmten Spannungsschwellwerten, um die selektive Erfassung des Gases zu ermöglichen.

2. Vorrichtung nach Anspruch 1, dadurch gekennzeichnet, daß die halbleitende Schicht (4) des Feststoff-Meßaufnehmers (10) mit einem Katalysator versehen ist, in einem Verhältnis größer als 1 Gewichts-%, jedoch weniger oder gleich 20 Gewichts-%.

3. Vorrichtung nach Anspruch 1 oder 2, dadurch gekennzeichnet, daß der Feststoff-Meßaufnehmer weiterhin eine isolierende Schicht (6) aufweist, die das Heizelement und die erste Oberseite des Substrats bedeckt.

4. Vorrichtung nach einem der Ansprüche 1 bis 3, dadurch gekennzeichnet, daß der Feststoff-Meßaufnehmer weiterhin ein isolierendes poröses Depot (5) aufweist, das auf der halbleitenden Schicht (4) abgelegt ist.

5. Vorrichtung nach Anspruch 3 oder 4, dadurch gekennzeichnet, daß das isolierende poröse Depot und die isolierende Schicht (5, 6) aus Aluminiumoxid gebildet sind.

6. Vorrichtung nach Anspruch 5, dadurch gekennzeichnet, daß wenigstens eine der isolierenden Schichten (5, 6) des Feststoff-Meßaufnehmers (10) mit einem Katalysator in einem Verhältnis versehen ist, das größer als 1 Gewichts-%, jedoch geringer oder gleich 20 Gewichts-% ist.

7. Vorrichtung nach Anspruch 1, dadurch gekennzeichnet, daß der Referenzaufnehmer (20) darüber hinaus eine isolierende Schicht (16) ohne Katalysator und das Heizelement und die erste Oberseite des Substrats überdeckend aufweist, sobald der Feststoff-Aufnehmer (10) selbst eine derartige zusätzlich isolierende Schicht aufweist.

8. Vorrichtung nach Anspruch 7, dadurch gekennzeichnet, daß der Referenzaufnehmer (20) weiterhin eine zweite isolierende Schicht (15) aufweist, die ebenfalls ohne Katalysator ist und die zweite Oberseite des Substrats bedeckt.

9. Vorrichtung nach Anspruch 7 oder 8, dadurch gekennzeichnet, daß die isolierenden Schichten (15, 16) ohne Katalysator des Referenzaufnehmers aus Glas gebildet sind.

10. Vorrichtung nach einem der Ansprüche 1 bis 8, dadurch gekennzeichnet, daß die Meß- und Referenzaufnehmer (10, 20) gemäß einer Technologie gebildet sind, die Mehrschichttechnik ("multicouche") genannt wird.

11. Vorrichtung nach einem der Ansprüche 1 bis 10, dadurch gekennzeichnet, daß die Schwellspannungen und die Zuführspannungen des Halbleiterelements (4) und der Heizelemente (2, 12) ausgehend von einer einzigen Referenzquelle (30) ausgebildet werden.

12. Vorrichtung nach einem der Ansprüche 1 bis 11, dadurch gekennzeichnet, daß die Heizelemente (2, 12) jeweils in einem Arm einer Widerstandsbrücke angeordnet sind, die von der einzigen Referenzquelle (30) gespeist wird und mittels eines Verstärkers (39) die Spannungsdifferenz S liefert.

13. Vorrichtung nach einem der Ansprüche 1 bis 12, dadurch gekennzeichnet, daß sie weiterhin einen Seh- oder Höralarm (43) aufweist, der ausgelöst wird, wenn einer der vorbestimmten Spannungsschwellenwerte überstiegen wird, ohne daß der andere ebenfalls überstiegen wird.

## Claims

1. A device for selective detection of gas, enabling a first gas to be detected relative to a second gas, the device being characterized in that it comprises:
. a solid state sensor provided with an insulating substrate (1) having a first face and a second face, a heater element (2) deposited on the first face of said substrate, metal electrodes (3) deposited on the second face of said substrate, and a semiconductor layer (4) formed on said electrodes and over the second face of said substrate,
. a reference sensor (20) provided with an insulating substrate (11) having a first face and a second face and a heater element (12) deposited on the first face of said substrate, said insulating substrate and said heater element having dimensions that are identical to the dimensions of the insulating substrate and of the heater element of the sensor, respectively.
. means for determining a voltage U representative of the resistance of the semiconductor element (4) of the solid state sensor (10),
. means for determining a voltage difference S between a voltage representative of the temperature of the heater element (2) of said solid state sensor and a voltage representative of the temperature of the heater element (12) of said reference sensor (20),
. and means for comparing said voltage U and said voltage difference S with two different and predetermined threshold voltages in order to enable selective detection of gas.

2. The device according to claim 1, characterized in that the semiconductor layer (4) of the solid state sensor (10) is provided with a catalyst constituting more than 1% but not more than 20% by weight thereof.

3. The device according to claim 1 or claim 2, characterized in that said solid state sensor also includes an insulating layer (6) covering the heater element and the first face of said substrate.

4. The device according to any one of claims 1 to 3, characterized in that said solid state sensor further includes a porous insulating deposit (5) deposited on the semiconductor layer (4).

5. The device according to claim 3 or claim 4, characterized in that said porous insulating deposits and said insulating layer (5, 6) are constituted by alumina.

6. The device according to claim 5, characterized in that at least one of the insulating layers (5, 6) of the solid state sensor (10) is provided with a catalyst constituting more than 1% but no more than 20% by weight thereof.

7. The device according to claim 1, characterized in that said reference sensor (20) further comprises a catalyst-free insulating layer (16) covering the heater element and the first face of said substrate, if the solid state sensor (10) also includes such an additional insulating layer.

8. The device according to claim 7, characterized in that said reference sensor (20) further comprises a second catalyst-free insulating layer (15) covering the second face of said substrate.

9. The device according to claim 7 or claim 8, characterized in that the catalyst-free insulating layers (15, 16) of the reference sensor are made of glass.

10. The device according to any one of claims 1 to 8, characterized in that the sensors and the reference sensors (10, 20) are made using so-called "multilayer" technology.

11. The device according to any one of claims 1 to 10, characterized in that said threshold voltages and said power supply voltages for the semiconductor elements (4) and for the heater elements (2, 12) are derived from a single reference source (30).

12. The device according to any one of claims 1 to 11, characterized in that each of the heater elements (2, 12) is disposed in a respective branch of a resistance bridge powered from the single reference source (30) and delivering the voltage difference S via an amplifier (39).

13. The device according to any one of claims 1 to 12, characterized in that it further includes a visible or audible alarm (43) which is triggered when one of the predetermined threshold voltages is crossed without the other one also being crossed.
